**Europäisches Patentamt**

**European Patent Office**

**Office européen des brevets**

(19)

(11) Numéro de publication : **0 334 760 B1**

(12) **FASCICULE DE BREVET EUROPEEN**

(45) Date de publication du fascicule du brevet :
**26.05.93 Bulletin 93/21**

(51) Int. Cl.$^5$ : **C04B 35/44, C04B 35/64**

(21) Numéro de dépôt : **89400819.2**

(22) Date de dépôt : **23.03.89**

(54) **Procédé de fabrication de pièces en spinelle d'aluminate de magnésium à hautes performances, notamment de pièces transparentes dans le domaine infrarouge et visible.**

Le dossier contient des informations techniques présentées postérieurement au dépôt de la demande et ne figurant pas dans le présent fascicule.

(30) Priorité : **25.03.88 FR 8803941**

(43) Date de publication de la demande :
**27.09.89 Bulletin 89/39**

(45) Mention de la délivrance du brevet :
**26.05.93 Bulletin 93/21**

(84) Etats contractants désignés :
**DE GB IT NL**

(56) Documents cités :
**FR-A- 2 286 119**
**US-A- 3 767 745**
**US-A- 3 974 249**

(73) Titulaire : **COMMISSARIAT A L'ENERGIE ATOMIQUE**
**31/33, rue de la Fédération**
**F-75015 Paris Cédex 15 (FR)**

(72) Inventeur : **Bergez, Pierre**
**32, Rue Dareau**
**F-75014 Paris (FR)**
Inventeur : **Raynal, Régis**
**119, Avenue de la République**
**F-91230 Montgeron (FR)**

(74) Mandataire : **Mongrédien, André et al**
**c/o BREVATOME 25, rue de Ponthieu**
**F-75008 Paris (FR)**

EP 0 334 760 B1

Jouve, 18, rue Saint-Denis, 75001 PARIS

## Description

La présente invention a pour objet un procédé de fabrication de pièces en spinelle d'aluminate de magnésium à hautes performances, c'est-à-dire comportant un minimum de défauts, notamment de pièces transparentes dans le domaine infrarouge et visible.

Des pièces transmettant le rayonnement infrarouge peuvent trouver diverses applications qui peuvent aller du domaine des lentilles infrarouges et des composants optiques apparentés au domaine des fenêtres infra-rouges pour lasers, spectromètres infrarouges et réacteurs de fusion, des irdomes pour le guidage par infra-rouge des fusées, et des dômes de missile qui fonctionnent principalement pour protéger les systèmes de détection vis-à-vis de l'environnement. Des pièces transparentes dans le domaine visible peuvent trouver des applications dans les blindages transparents et de lentille de caméra.

Pour certaines applications telles que les composants de laser à infrarouge, il est nécessaire que la transmission dans le domaine infrarouge soit voisine de 100% de la transmission théorique à la longueur d'onde désirée afin d'empêcher le chauffage et les déformations qui en résultent ou même la fusion des constituants. En revanche, pour d'autres utilisations telles que les lentilles de caméra, les fenêtres protectrices et les irdomes, on peut tolérer des pièces ayant une transmission un peu inférieure à 100% de la transmission théorique.

Pour ces différentes applications, la transmission dans l'infra-rouge de la pièce est une propriété importante, mais il est nécessaire par ailleurs que ces pièces résistent aux chocs thermiques qui peuvent être produits par chauffage aérodynamique ainsi qu'aux effets à long terme de la pluie et de l'érosion par des particules solides. Dans certains cas, il est de plus nécessaire que les pièces soient résistantes à des milieux hostiles par exemple radioactifs, corrosifs ou à température élevée.

Ainsi, de telles pièces doivent présenter de bonnes propriétés mécaniques, une transparence optique élevée dans le domaine allant du visible aux rayonnements infrarouges jusqu'à des longueurs d'ondes de 4,5 μm, et de préférence une bonne résistance à des milieux hostiles.

Les matières céramiques susceptibles d'être utilisées pour la réalisation de telles pièces peuvent être des spinelles tels que les spinelles d'aluminate de magnésium $MgAl_2O_4$ et des grenats ; des oxydes simples ou mixtes comme $MgO$, $Y_2O_3$, $Yb_2O_3$, $ZrO_2$ dopé par $Y_2O_3$, $Sc_2O_3$, $Gd_2O_3$, $ZnO$, $BeO$, $Al_2O_3$, $(Y,La)_2O_3$, $CaWO_4$, $PbWO_4$, $PbMoO_4$ ; et des oxydes dopés par des fluorures comme $CaO$ dopé par $CaF_2$ et $MgO$ dopé par $LiF$.

On peut aussi utiliser des oxydes du type $LiAl_5O_8$, $(Pb,La)$ $(Zr,Ti)O_3$ ou $(Pb,La)$ $(Hf,Ti)O_3$, des fluorures comme $BaF_2$, $MgF_2$ et des chalcogénures comme $ZnS$ et $ZnSe$.

Parmi les matériaux mentionnés ci-dessus, on préfère les spinelles d'aluminate de magnésium de formule $MgAl_2O_4$ car ils offrent les meilleures compatibilités entre de bonnes propriétés optiques intrinsèques et de bonnes propriétés physicochimiques telles que la résistance mécanique, la dureté, la résistance aux hautes températures, la résistance chimique, la tenue sous irradiation et la constante diélectrique.

Des pièces translucides en céramique de ce type ont pu être préparées par frittage naturel d'une poudre de la matière céramique, à des températures élevées, en ajoutant à la poudre une très faible quantité (0,1 à 1%) d'un oxyde pour faciliter le frittage, par exemple de l'oxyde de calcium $CaO$, comme il est décrit par R.J. Bratton dans Journal of The American Ceramic Society, vol.57, n°7 (1974) p.283 à 286. Cependant, cette méthode est limitée à l'obtention de pièces d'épaisseur faible et de transmission limitée ; par ailleurs, le frittage naturel conduit à une taille de grains relativement élevée (environ 50 μm), ce qui ne permet pas d'obtenir les propriétés mécaniques souhaitées.

On a aussi envisagé d'utiliser des techniques de compression à chaud pour obtenir des pièces transparentes en $MgAl_2O_4$ comme il est décrit par Donald W. Roy dans SPIE vol 297, Emerging Optical Materials (1981) p.13 à 18, et par S.K. Dutta et G.E. Gazza dans Mat. Res. Bull. vol.4, p.791-796, (1969). Ces techniques de pressage à chaud ne permettent d'obtenir de meilleurs résultats que dans le cas où l'on réalise les pièces par frittage naturel, mais dans le cas de pièces de dimensions importantes, il est difficile d'éviter que les pièces ne présentent certaines inhomogénéités, et ceci donne lieu à des difficultés pour obtenir avec une bonne reproductibilité des pièces présentant les propriétés de transmission optique souhaitées.

D'aure part, la densification complète du spinelle d'aluminate de magnésium $Al_2O_3$, $MgO$ ($MgAl_2O_4$) par la seule technique de compaction isostatique à chaud directe avec encapsulation ne permet pas un dégazage suffisant et le niveau de transmission dans les domaines I.R. et visible de la pièce de spinelle ainsi obtenue est fortement diminué par la microporosité qui renferme les gaz résiduels.

Si l'on se contente d'utiliser le frittage naturel seul, ou suivi d'une compaction isostatique à chaud, pour élaborer des pièces en spinelle ($MgO$-$Al_2O_3$), il apparaît des points blancs (zones opaques) dans le matériau totalemeent densifié et transparent. Ce phénomène inacceptable résulte de la ségrégation de l'oxyde $MgO$ aux joints de grains, laquelle s'effectue de manière inhomogène lorsque la vitesse de montée en température est lente.

Lorsque cette vitesse de montée augmente, l'homogénéité de la ségrégation est améliorée et l'apparition des points blancs est plus limitée. Malheureusement, la fabrication de pièces de dimensions importantes exige de faibles vitesses de montée en température pour éviter les fissurations dues aux départs de gaz et aux gradients de température entre le coeur et la périphérie des pièces, ce qui rend cette façon de procéder inutilisable pour les applications envisagées.

Le document US-A-3 767 745 est relatif à l'obtention de céramiques transparentes à grains fins, notamment de spinelles $MgAl_2O_4$. Pour l'essentiel le procédé consiste à préparer une préforme compacte par compression à froid, à la dégazer par chauffage vers 600°C puis à la placer dans une matrice où on la soumet simultanément à une pression de 6000 à 7000 psi ($41,4x10^6$ Pa à $48,30x10^6$ Pa) et à une température croissant par paliers de 50°C depuis 1150°C jusqu'à 1500°C.

La présente invention a précisément pour objet un procédé de fabrication de pièces en spinelle d'aluminate de magnésium $MgAl_2O_4$ à hautes performances, qui permet d'obtenir une transmission appropriée dans le domaine infrarouge et visible, ainsi que de bonnes propriétés mécaniques tout en donnant la possibilité d'obtenir une bonne reproductibilité et une bonne homogénéité, à des conditions peu onéreuses.

Ce procédé consiste, pour l'essentiel, à préparer, par compression à froid, à partir d'une poudre de spinelle contenant un excès pondéral de 0,5% à 5% de magnésie MgO, une préforme de spinelle consolidé, à soumettre cette pièce à un frittage naturel pour obtenir un produit dégazé à porosité fermée faible, puis à réaliser une post-densification par compression isostatique à chaud qui assure l'homogénéisation et la densification totale des pièces.

Le procédé objet de l'invention est un procédé au cours duquel la compaction isostatique à chaud ne joue que le rôle de post-densification de pièces de spinelle préalablement frittées à porosité fermée, sous air ou sous vide, le frittage naturel permettant le dégazage préalable poussé de la pièce de spinelle avant sa densification finale.

Ce procédé permet également l'utilisation d'une vitesse lente de montée en température, nécessaire à la fabrication de pièces moyennes et grosses sans fissuration tout en évitant l'apparition de défauts sous forme de points blancs précédemment évoqués : elle consiste à introduire dans la poudre de spinelle de départ un excès de MgO par rapport à la quantité stoechiométrique. Cet excès pondéral doit être compris entre 0,5 et 5% et de préférence entre 1% et 3%.

Le rôle de cet excès s'explique de la façon suivante :

L'état d'énergie minimale de la céramique spinelle correspond à une concentration plus de MgO aux joints de grains ou à la surface des grains. Il s'ensuit qu'en l'absence d'ajout, lors de la montée en température au cours du frittage, la magnésie a tendance à migrer de l'intérieur vers l'extérieur des grains et à ségréger. Comme la préforme en spinelle comporte de nombreuses hétérogénéités microstructurales (gros pores) ou chimiques (gradient de concentration en MgO, impuretés, etc...), cette ségrégation s'effectue préférentiellement dans certaines zones sous forme ponctuelle. C'est ainsi que dans ces zones où l'énergie a diminué et qui sont moins réactives lors du frittage, l'élimination de la microporosité peut devenir difficile et incomplète, ce sont ces microzones hétérogènes, à porosité résiduelle, qui apparaissent sous forme de points blancs dans l'ensemble de la matrice transparente.

La ségrégation homogène de l'oxyde MgO sans ajout nécessite une vitesse de montée en température rapide qui ne permet pas la fabrication de pièces de taille importante sans fissuration (ou tension). L'ajout de MgO (oxyde dont la tension de vapeur est élevée) assure un équilibre chimique entre les grains et leur surface qui évite ces phénomènes de ségrégation (diffusion volumique). Une proportion de 0,5 à 5% est nécessaire pour qu'un excès de MgO initial soit suffisamment présent à la surface des grains pour être efficace et réaliser cet équilibre chimique.

Outre assurer l'équilibre chimique entre les grains et leur surface, l'ajout de MgO peut en plus compenser les pertes de MgO sous forme de vapeur qui peuvent se produire lors du traitement thermique de frittage. Ainsi secondairement il assure le minimum stoechiométrique en MgO dans l'ensemble de la pièce surtout lorsqu'elle est de dimension importante et traitée thermiquement avec vitesse de montée en température lente surtout si ce traitement a lieu sous vide.

L'opération de frittage naturel se fait par action de la chaleur, sous vide ou dans un four à l'air libre, la température T1 étant de l'ordre de 1430°C à 1700°C et le temps de palier t1 de l'ordre de 15 mn à 3h. L'optimisation de ces paramètres dépend des caractéristiques des poudres (surface spécifique, granulométrie, etc....). L'excès de MgO joue également le rôle d'activation du frittage et sa proportion peut intervenir dans le choix de ces paramètres. Cette opération réalise ainsi le dégazage et la fermeture presque totale de la porosité de l'éprouvette de spinelle, dans laquelle il ne reste plus que de très rares zones d'air ou de vide interconnectées.

La compression isostatique à chaud est réalisée à une température T2 généralement supérieure ou égale à la température T1. Cette différence de température est de préférence comprise entre 10 et 200°C. La pression de palier P2 est de préférence supérieure à $800.10^5$ Pa (800 bars). On peut jouer de façon simultanée sur les paramètres P2 et T2 afin d'obtenir les mêmes effets de densification. Ainsi une diminution de la température T2 peut être compensée par une augmentation de la pression P2 et vice versa.

Le procédé de l'invention se décompose ainsi essentiellement en trois grandes étapes dont chacune d'elles apporte ses spécificités à la pièce obtenue.

La première étape permet la préparation de la préforme compacte de spinelle à froid ; la deuxième étape de frittage naturel conduit au dégazage des pores et à la fermeture quasi complète de la porosité ; la troisième étape réalise la densification finale à chaud, tout en assurant une bonne homogénéité et en éliminant la majorité des défauts et en particulier les microporosités.

De plus, le fait de réaliser la compression isostatique à chaud après une étape de frittage, permet d'éviter l'emploi d'une capsule pour la compression isostatique à chaud puisque la pièce soumise à cette compression isostatique est dégazée et comme elle ne présente pas de porosité ouverte, elle assure sa propre étanchéité au gaz de compression.

En revanche, si l'on soumettait directement la poudre à une compression isostatique à chaud, il serait nécessaire de disposer celle-ci dans une capsule capable de se déformer dans les conditions de température et de pression utilisées pour cette compression isostatique, sans fondre et sans réagir avec la pièce. Ceci est très difficile à obtenir car il risque toujours d'y avoir des phénomènes de diffusion entre la gaine et la matière céramique. De plus, la présence de la gaine rend les opérations de dégazage très délicates.

Ainsi, le procédé de l'invention est avantageux puisqu'il permet d'éviter l'emploi d'une capsule. Par ailleurs, il permet l'obtention de pièces de dimensions importantes dans des conditions peu onéreuses, avec une grande fiabilité de reproductibilité en ce qui concerne l'homogénéité des pièces obtenues, en particulier leur microstructure et leur transmission infrarouge, sans qu'il soit nécessaire d'effectuer un réglage très fin des paramètres de fabrication.

De plus, grâce à la technologie utilisée pour la fabrication des pièces, qui ne nécessite pas l'utilisation d'additifs qui forment une phase liquide pour faciliter la densification, ou de températures très élevées de traitement, les bonnes propriétés optiques de la pièce obtenue s'accompagnent de bonnes propriétés physico-chimiques, notamment d'une bonne résistance mécanique, dues en particulier à la finesse des grains et à l'absence d'une deuxième phase aux joints de grains.

Généralement, on réalise tout d'abord une compression à froid et de préférence une compression isostatique à froid de la poudre de la matière céramique pour former une préforme que l'on soumet ensuite au frittage naturel.

La poudre de matière céramique de départ est de préférence une poudre de haute pureté, ayant par exemple au plus 100 ppm d'impuretés cationiques hormis les impuretés introduites volontairement dans le cas où l'on veut colorer la pièce.

En effet, la pureté est nécessaire au niveau cationique afin d'obtenir des joints de grains propres ; des cations tels que Fe, Pb, Zn sont en particulier très néfastes pour les propriétés optiques. Il est également nécessaire que le taux d'espèces anioniques adsorbées ($OH^-$, $SO_4^{2-}$, etc...) soit le plus faible possible. En particulier, des espèces telles que $OH^-$ peuvent provoquer un pic d'absorption très marqué aux environs de 2,9 µm sur le spectre de transmission infrarouge.

Dans le procédé de l'invention, il est important d'éviter la présence d'impuretés du type "poussières" car celles-ci risquent de faire apparaître des "points noirs" dans la pièce obtenue. Dans ce but, toutes les manipulations de la poudre sont réalisées avec précaution dans des lieux propres en l'absence de poussières et de matières organiques.

La granulométrie de la poudre de départ et sa surface spécifique jouent également un rôle important car elles conditionnent les mécanismes de densification et exercent une influence sur la microporisté de la pièce. En effet, plus la surface spécifique de la poudre est importante, plus les mécanismes de densification sont favorisés, mais l'aptitude au dégazage décroit en fonction de la surface spécifique de la poudre. Aussi, il est nécessaire de trouver un compromis entre ces deux effets inverses, et on choisit de préférence une poudre dont la surface spécifique va de 30 à 180 $m^2/cm^3$.

Généralement, pour faciliter le frittage du spinelle $MgAl_2O_4$, la compression isostatique à froid est réalisée à une pression supérieure à $5.10^5$ Pa (500 bars). D'autre part, des pressions supérieures à $2500.10^5$ Pa (2500 bars) paraissent n'apporter aucune amélioration.

La compression isostatique à chaud peut être réalisée par l'intermédiaire d'un gaz inerte tel que l'argon. Comme on l'a vu précédemment, il n'est pas nécessaire d'utiliser une capsule pour réaliser la compression isostatique à chaud, car le produit soumis à cette compression isostatique n'a pas de porosité ouverte. De ce fait, l'opération peut être très rapide et les pièces introduites directement dans l'enceinte d'une presse isostatique. La pression utilisée est généralement supérieure à $800.10^5$ Pa (800 bars).

Les conditions de température et de pression permettent essentiellement d'optimiser les qualités optiques de la pièce dans le domaine du visible et du proche infrarouge.

Pour réaliser cette étape de compression isostatique à chaud, on peut maintenir la pression P2 et la température T2 pendant une durée allant de 10 mn à 2 heures.

Dans ces conditions, on obtient une densité quasi théorique, une transmission infrarouge théorique et des pièces de taille importante totalement homogènes. De plus, le faible grossissement des grains confère de bonnes propriétés physiques à la pièce, en particulier du point de vue de la résistance mécanique.

D'autres caractéristiques et avantages de l'invention apparaîtront mieux à la lecture des exemples suivants, donnés bien entendu à titre illustratif et non limitatif, en référence au dessin annexé sur lequel :

- la figure 1 montre schématiquement l'état d'un barreau céramique en spinelle avec ajout à la poudre de départ, d'oxyde de magnésium MgO (figure A) et sans cet ajout (figure B),
- la figure 2 montre la variation de la transmission (en %), dans l'ultraviolet et le visible d'une pièce de spinelle d'aluminate de magnésium, en fonction de la longueur d'onde (en nanomètres), pour trois épaisseurs différentes,
- la figure 3 est une courbe représentant la transmission infrarouge (en %) d'une pièce de spinelle d'aluminate de magnésium, en fonction du nombre d'ondes (en $cm^{-1}$) et de la longueur d'onde (en micromètres), pour trois épaisseurs différentes,
- la figure 4 est une micrographie représentant la structure de la pièce obtenue dans l'exemple 1.

Le mode opératoire, simple et précis, pour la fabrication industrielle de pièces de dimensions relativement importantes, sera décrit ci-dessous dans deux exemples, à titre illustratif en non limitatif.

## Mode opératoire et exemple 1

Une poudre de spinelle contenant un excès pondéral de 2,5% de MgO - introduit de préférence au cours de la fabrication du spinelle d'aluminate de magnésium de façon à être diffus - de surface spécifique 15 $m^2/g$, est introduite et tassée dans une gaine de latex de diamètre 100 mm, fermée par un bouchon, de façon à être comprimée isostatiquement à $2,5.10^5$ k Pa (2,5 kbars).

Le cylindre de spinelle consolidé ainsi constitué est ensuite porté dans un four à atmosphère pour y être fritté selon le cycle suivant : montée en température à 2°C/minute jusqu'à 1600°C - palier de 2 heures à 1600°C - refroidissement à 2°C/minute. Le traitement peut être effectué sous air, mais il est avantageux de l'effectuer sous vide. La pièce frittée ainsi produite, présente une porosité fermée faible, inférieure à 4,5%.

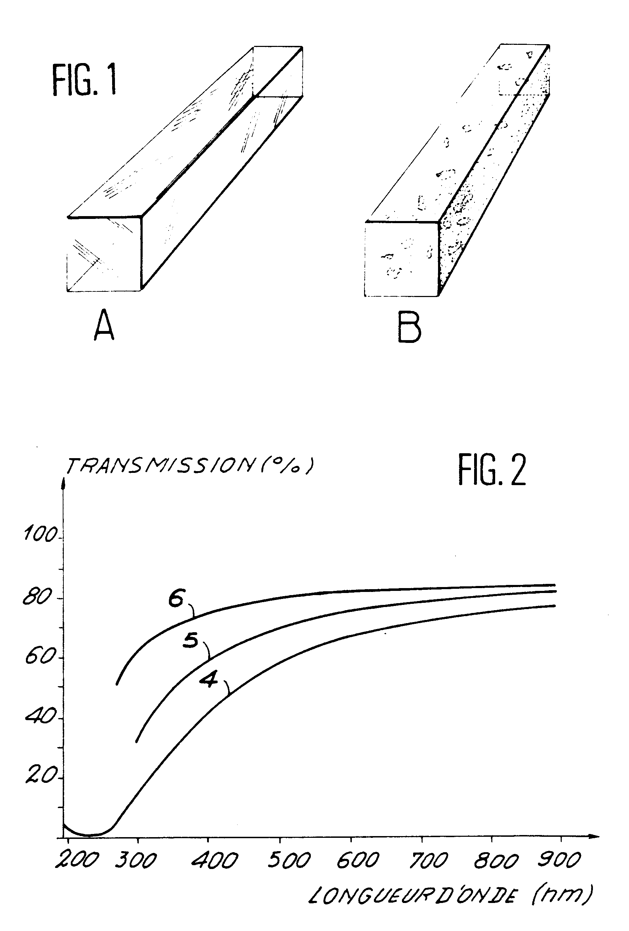

Dans un dernier stade de fabrication, cette pièce est post-densifiée par une compression isostatique à chaud directement sans encapsulation - constituée par un traitement de 1700°C sous $1100.10^5$ Pa (1100 bars) pendant 45 minutes. On obtient ainsi une pièce transparente de diamètre 50 mm, dans laquelle il est possible de découper des barreaux et des disques, qui après polissage sont caractérisés par les figures 1, 3 et 5.

Les figures 1A et 1B illustrent clairement l'effet de l'ajout de MgO selon le procédé objet de l'invention. La figure 1A est relative au barreau taillé dans la pièce, il est complètement transparent et sans défaut. La figure 1B au contraire, relative à une pièce en spinelle, fabriquée sans ajout de MgO, fait apparaître un certain nombre de points blancs (en noir sur le dessin évidemment), situés dans le réseau des grains et qui rendent cette pièce en spinelle totalement inapte à son usage comme corps transparent, notamment aux rayonnements infrarouges.

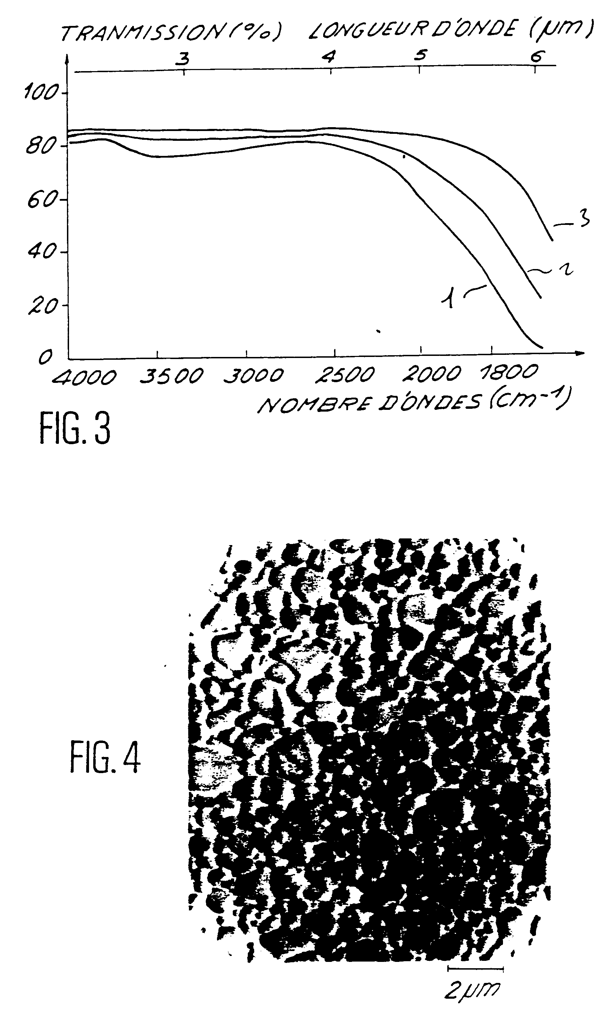

Sur la figure 3, on a représenté la transmission infrarouge de la pièce obtenue en fonction du nombre d'ondes (en $cm^{-1}$) et de la longueur d'onde (en microns). Sur cette figure, la courbe 1 se rapporte à un disque d'épaisseur de 5,94 mm, les courbes 2 et 3 sont obtenues par le calcul d'après la loi de Lambert-Bouger :

$$T = (1 - R)^2 e^{- \alpha E}$$

dans laquelle T représente la fraction du rayonnement transmis, R représente le coefficient de réflexion de surface qui est égal à $(n-1)^2/(n+1)^2$ avec n représentant l'indice de réfraction, $\alpha$ est le coefficient d'absorption, et E est l'épaisseur de la pièce.

Pour $MgAl_2O_4$, n est sensiblement égal à 1,72 et il en résulte que (1-R) est égal à 0,86. Ainsi, la transmission théorique de $MgAl_2O_4$ est de 86%.

Les courbes 2 et 3 illustrent la transmission infrarouge obtenue par le calcul de pièces ayant respectivement 1 et 3 mm d'épaisseur. La pièce obtenue par le procédé de l'invention (courbe 1) a un coefficient d'absorption faible sur l'ensemble du domaine de transmission qui va, sur la figure 3, de 4000 à 25000 $cm^{-1}$ (2,5 à 4,5 micromètres). On remarque toutefois un très léger pic d'absorption $OH^-$ aux environs de 2,9 micromètres, mais celui-ci peut être éliminé en effectuant un dégazage plus poussé.

Sur la figure 2 on a représenté les courbes de transmission dans le domaine U.V. et visible de la pièce spinelle, en fonction de la longueur d'onde en nanomètres. Sur cette figure, la courbe 4 se rapporte à la pièce qui a une épaisseur de 5,94 mm et les courbes 5 et 6 sont obtenues par le calcul d'après la loi de Lambert-Bouger, pour des épaisseurs de 3 et 1 mm respectivement.

## Exemple 2 : fabrication d'un cylindre coloré en rouge.

On utilise une poudre de spinelle $MgAl_2O_4$ dont la surface spécifique est de 35 $m^2/g$ et contenant 2% de MgO et 200 ppm de $Cr_2O_3$. Comme dans l'exemple 1, cette poudre est comprimée isostatiquement à froid à $2,5.10^5$ k Pa (2,5 kbars).

Le cylindre ainsi constitué est fritté sous air à 1550°C pendant 1 heure. La pièce obtenue présente une porosité globale voisine de 4%.

La compression isostatique à chaud est réalisée à 1580°C, sous 1500 $10^5$ Pa (1500 bars) pendant 30 minutes.

Le cylindre obtenu (diamètre 40 mm, hauteur 80 mm) est totalement dense, sans défaut et apparaît, après polissage, rouge et translucide dans toute sa masse.

## Revendications

1. Procédé de fabrication de pièces en spinelle MgAl$_2$O$_4$, à hautes performances de transparence dans les domaines infrarouge et visible, correspondant à une transmission de 50 à 84 % pour des longueurs d'onde allant jusqu'à 4,5 micromètres, à partir d'une préforme obtenue par compression à froid de poudre de MgAl$_2$O$_4$, consistant à :
   - utiliser pour cette étape de compression à froid une poudre de spinelle à laquelle on a ajouté, de préférence au cours de la fabrication de la poudre, un excès pondéral de 0,5 % à 5 % de magnésie MgO par rapport à la composition stoechiométrique ;
   - procéder à un frittage naturel de cette préforme pour obtenir un produit dégazé à porosité fermée faible, inférieure à 4,5 % ;
   - effectuer une post-densification et homogénéisation de cette préforme par compression isostatique à chaud.

2. Procédé de fabrication selon la revendication 1, caractérisé en ce que l'excès pondéral de magnésie MgO est compris de préférence entre 1 et 3 %.

3. Procédé de fabrication selon l'une quelconque des revendications 1 et 2, caractérisé en ce que le frittage naturel se fait dans un four, sous vide ou à l'air libre, à une température de l'ordre de 1430°C à 1700°C.

4. Procédé de fabrication selon l'une quelconque des revendications 1 à 3, caractérisé en ce que l'étape de compression isostatique à chaud est réalisée dans une atmosphère de gaz inerte sous une température de 1580°C à 1700°C et une pression comprise entre 800.10$^5$ et 2000 10$^5$ Pa (800 et 2000 bars) pendant une durée de 10 minutes à 2 heures au plus.

## Patentansprüche

1. Verfahren zur Herstellung von Hochleistungsteilen aus MgAl$_2$O$_4$-Spinell mit einer Transparenz im infraroten und sichtbaren Bereich entsprechend einer Transmission von 50 bis 84 % für Wellenlängen bis zu 4,5 Mikrometer, ausgehend von einem Vorformling, der durch Kaltpressen von MgAl$_2$O$_4$-Pulver erhalten wird, umfassend:

Das Verwenden eines Spinellpulvers für diesen Schritt des Kaltpressens, dem man, vorzugsweise im Laufe der Herstellung des Pulvers, einen Überschuß von 0,5 bis 5 Gewichtsprozent von Magnesiumoxid MgO, bezogen auf die stöchiometrische Zusammensetzung, zugegeben hat;
das Sintern (frittage naturel) dieses Vorformlings, um ein entgastes Produkt mit einer geringen geschlossenen Porosität, unterhalb von 4,5 %, zu erhalten;
das Ausführen einer Nachverdichtung und Homogenisierung dieses Vorformlings durch heißisostatisches Pressen.

2. Verfahren zur Herstellung nach Anspruch 1, **dadurch gekennzeichnet** daß der Überschuß an Magnesiumoxid MgO vorzugsweise zwischen 1 und 3 Gewichtsprozent liegt.

3. Verfahren zur Herstellung nach einem der Ansprüche 1 und 2, **dadurch gekennzeichnet,** daß das Sintern in einem Ofen unter Vakuum oder an der Luft bei einer Temperatur in der Größenordnung von 1430 bis 1700°C stattfindet.

4. Verfahren zur Herstellung nach einem der Ansprüche 1 bis 3, **dadurch gekennzeichnet,** daß der Schritt des heißisostatischen Pressens in einer Inertgasatmosphäre bei einer Temperatur von 1580 bis 1700°C und unter einem Druck zwischen 800·10$^5$ und 2000·10$^5$ Pa (800 und 2000 bar) während eines Zeitraums von 10 Minuten bis maximal 2 Stunden durchgeführt wird.

## Claims

1. Process for manufacturing components made from MgAl$_2$O$_4$ spinel and having high performance in terms of transparency in the infrared and visible range, corresponding to a transmission of from 50 to 84% for wavelengths up to 4.5 micrometres, from a preform obtained by cold pressing of MgAl$_2$O$_4$ powder, consisting in:
   - using, for this cold pressing step, a spinel powder to which has been added, preferably during the manufacture of the powder, an excess by weight of from 0.5% to 5% of MgO magnesia with respect to the stoichiometric composition;
   - carrying out a natural sintering of this preform in order to obtain a degassed product having a low closed porosity less than 4.5%;
   - carrying out a post-densification and blending of this preform by hot isostatic pressing.

2. Manufacturing process according to Claim 1, characterised in that the excess by weight of MgO magnesium is preferably between 1 and 3%.

3. Manufacturing process according to either of Claims 1 and 2, characterised in that the natural sintering is carried out in a furnace, under vacuum or in the open air, at a temperature of the order of from 1430°C to 1700°C.

4. Manufacturing process according to any one of Claims 1 to 3, characterised in that the hot isostatic pressing step is carried out in an inert gas atmosphere at a temperature of from 1580°C to 1700°C and at a pressure of between 800 x 10$^5$ and 2000 x 10$^5$ Pa (800 and 2000 bars) for a period of from 10 minutes to at most 2 hours.

FIG. 1

A

B

FIG. 2

TRANSMISSION (%)

LONGUEUR D'ONDE (nm)

FIG. 3

FIG. 4

2μm